# EUROPEAN PATENT APPLICATION

(11) **EP 4 765 925 A1**
(43) Date of publication of application: **24.06.2026**
(21) Application number: 23949177.2
(22) Date of filing: 16.08.2023
(51) Int. Cl.: H04W 24/02

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); NAGATA, Satoshi, Tokyo 100-6150 (JP); YOU, Luhua, Beijing 100190 (CN); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2023/029640
(87) International publication number: WO 2025/037409

(57) **Abstract**

A terminal according to one aspect of the present disclosure includes: a receiving section that receives information identifying a model associated with a functionality or a functionality associated with a model; and a control section that judges a model or a functionality to be applied, based on the information. The control section judges simultaneous operation of operation related to the model and operation related to the functionality, based on a certain rule. According to one aspect of the present disclosure, preferable overhead reduction/channel estimation/resource use can be achieved.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is studied to utilize the artificial intelligence (AI) technology, such as machine learning (ML), for control, management, and the like of networks/devices.

As use cases of utilizing an AI model, spatial domain downlink (DL) beam prediction, temporal DL beam prediction, positioning, and the like are under study. Such a beam prediction method may be referred to as AI-based beam prediction (beam reporting), AI-based positioning, AI-based beam management (BM), and the like. The temporal DL beam prediction may be referred to as, for example, time domain channel state information (CSI) prediction and the like.

In such AI utilization, introduction of a plurality of types of life cycle management (LCM) has been studied, but the study is not sufficient for some cases. Unless the study is sufficient, preferable overhead reduction/channel estimation/resource use cannot be achieved, which may suppress improvement of communication throughput/communication quality.

Thus, an object of the present disclosure is to provide a terminal, a radio communication method, and a base station capable of achieving preferable overhead reduction/channel estimation/resource use.

### Solution to Problem

A terminal according to one aspect of the present disclosure includes: a receiving section that receives information identifying a model associated with a functionality or a functionality associated with a model; and a control section that judges a model or a functionality to be applied, based on the information. The control section judges simultaneous operation of operation related to the model and operation related to the functionality, based on a certain rule.

### Advantageous Effects of Invention

According to one aspect of the present disclosure, preferable overhead reduction/channel estimation/resource use can be achieved.

### Brief Description of Drawings

[FIG. 1] FIG. 1 is a diagram to show an example of an AI model management framework.
[FIG. 2] FIG. 2 is a diagram to show an example of AI model identification.
[FIG. 3] FIG. 3 is a diagram to show an example of association between models and a functionality according to a first embodiment.
[FIG. 4] FIG. 4A and FIG. 4B are diagrams to show examples of association between a model(s) and functionalities according to a second embodiment.
[FIG. 5] FIG. 5A and FIG. 5B are diagrams to show examples of the association between a model(s) and functionalities according to the second embodiment.
[FIG. 6] FIG. 6A to FIG. 6C are diagrams to show variations of LCM association supported by a UE (terminal).
[FIG. 7] FIG. 7 is a diagram to show an example of LCM association supported by a UE according to a third embodiment.
[FIG. 8] FIG. 8 is a diagram to show an example of the LCM association supported by a UE according to the third embodiment.
[FIG. 9] FIG. 9 is a diagram to show an example of the LCM association supported by a UE according to the third embodiment.
[FIG. 10] FIG. 10A and FIG. 10B are diagrams to show an example of association between a mode(s) and a functionality (functionalities) according to a fourth embodiment.
[FIG. 11] FIG. 11A and FIG. 11B are diagrams to show examples of the association between a model(s) and a functionality (functionalities) according to the fourth embodiment.
[FIG. 12] FIG. 12A and FIG. 12B are diagrams to show examples of the association between a model(s) and a functionality (functionalities) according to the fourth embodiment.
[FIG. 13] FIG. 13A and FIG. 13B are diagrams to show examples of the association between a model(s) and a functionality (functionalities) according to the fourth embodiment.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.
[FIG. 18] FIG. 18 is a diagram to show an example of a vehicle according to one embodiment.

### Description of Embodiments

### (Application of Artificial Intelligence (AI) technology to Radio Communication)

For future radio communication technologies, a study is underway to utilize the AI technology, such as machine learning (ML), for control, management, and the like of networks/devices.

For example, a study is underway on a terminal (user terminal, User Equipment (UE))/base station (BS) utilizing the AI technology for improvement in channel state information (CSI) feedback (for example, overhead reduction, accuracy enhancement, prediction), enhancement in beam management (for example, accuracy enhancement, prediction in time/spatial domain), enhancement in location measurement (for example, location estimation/prediction enhancement), and the like.

The AI model may output at least one piece of information among an estimated value, a predicted value, a selected operation, classification, and the like, based on the input information. The UE/BS may input channel state information, a reference signal measurement value, and the like to the AI model and output highly accurate channel state information/measured value/beam selection/location, future channel state information/radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, estimation, prediction, and inference may be interchangeably interpreted. In the present disclosure, "estimate," "predict," and "infer" may be interchangeably interpreted.

In the present disclosure, the object may be, for example, an apparatus, a device, or the like, such as a UE or a BS. In the present disclosure, the object may correspond to a program/model/entity operating in the apparatus.

Note that, in the present disclosure, the AI model may be interpreted as an object having (implementing) at least one of the following features:
- generating an estimate by feeding information,
- predicting an estimate by feeding information,
- finding a feature by feeding information, and
- selecting operation by feeding information.

In the present disclosure, the AI model may mean a data-driven algorithm that applies AI technology and generates a set of outputs based on a set of inputs.

In the present disclosure, an AI model, a model, an ML model, predictive analytics, a predictive analytics model, a tool, an autoencoder, an encoder, a decoder, a neural network model, an AI algorithm, a scheme, and the like may be interchangeably interpreted. The AI model may be derived by using at least one of regression analysis (for example, linear regression analysis, multiple regression analysis, logistic regression analysis), support vector machine, random forest, neural network, deep learning, and the like.

In the present disclosure, the autoencoder may be interchangeably interpreted as an arbitrary autoencoder such as a stacked autoencoder and a convolutional autoencoder. The encoder/decoder in the present disclosure may adopt a model of Residual Network (ResNet), DenseNet, RefineNet, or the like.

In the present disclosure, an encoder, encoding, encode/encoded, modification/change/control by an encoder, compressing, compress/compressed, generating, generate/generated, and the like may be interchangeably interpreted.

In the present disclosure, a decoder, decoding, decode/decoded, modification/change/control by a decoder, decompressing, decompress/decompressed, reconstructing, reconstruct/reconstructed, and the like may be interchangeably interpreted.

In the present disclosure, a layer (for an AI model) may be interchangeably interpreted as a layer (input layer, intermediate layer) used in an AI model. The layer in the present disclosure may correspond to at least one of an input layer, an intermediated layer, an output layer, a batch normalization layer, a convolutional layer, an activation layer, a dense layer, a normalization layer, a pooling layer, an attention layer, a dropout layer, a fully-connected layer, and the like.

In the present disclosure, an AI model training method may include supervised learning, unsupervised learning, reinforcement learning, federated learning, and the like. The supervised learning may mean processing of training a model from an input and a corresponding label. The unsupervised learning may mean processing of training a model without labeled data. The reinforcement learning may mean processing of training a model from an input (that is, a state) and a feedback signal (that is, a reward) generated from an output (that is, an action) from the model in an environment in which models interact with each other.

In the present disclosure, generation, computation, derivation, and the like may be interchangeably interpreted. In the present disclosure, "perform," "manage," "operate," "carry out," and the like may be interchangeably interpreted. In the present disclosure, training, learning, update, retraining, and the like may be interchangeably interpreted. In the present disclosure, inference, after-training, substantial use, actual use, and the like may be interchangeably interpreted. In the present disclosure, a signal may be interpreted as a signal/channel and vice versa.

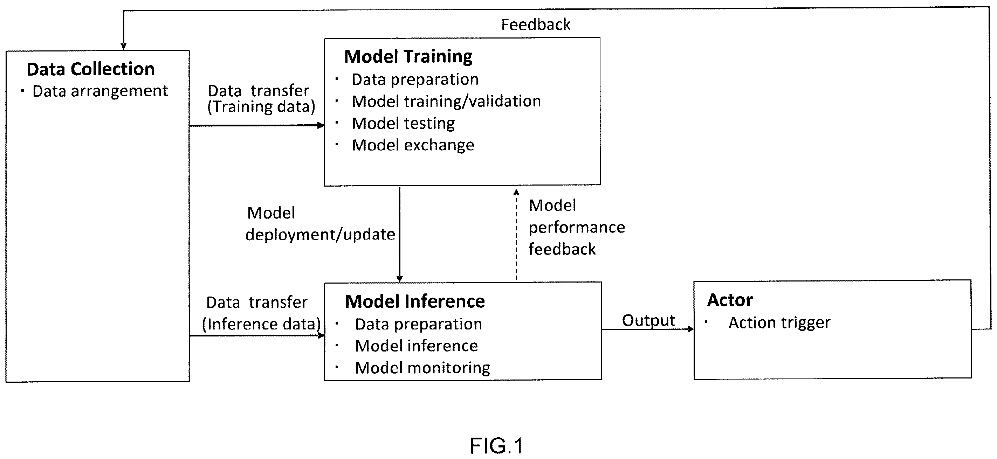

FIG. 1 is a diagram to show an example of an AI model management framework. In the present example, stages related to an AI model are shown using blocks. The present example is also expressed as AI model life cycle management (LCM).

A data collection stage corresponds to a stage to collect data for generating/updating the AI model. The data collection stage may include data arrangement (for example, determining which data is transferred for model training/model inference), data transferring (for example, transferring data to an entity (for example, UE, gNB) performing model training/model inference), and the like.

Note that data collection may mean processing in which a network node, a management entity, or a UE collects data for the purpose of AI model training/data analysis/inference. In the present disclosure, processing and a procedure may be interchangeably interpreted. In the present disclosure, collection may mean acquiring a data set (for example, available as an input/output) for training/inference of an AI model, based on measurement (channel measurement, beam measurement, radio link quality measurement, location estimation, or the like).

In the present disclosure, offline field data may be data collected from a field (real world) and used for offline training of an AI model. In the present disclosure, online field data may be data collected from a field (real world) and used for online training of an AI model.

A model training stage is to perform the model training, based on data (training data) transferred from the collection stage. This stage may include data preparation (for example, performing preprocessing, cleaning, formatting, conversion, and the like of data), model training/validation, model testing (for example, checking whether a trained model meets a performance threshold), model exchange (for example, transferring a model for distributed learning), model deployment/update (deploying/updating a model for an entity performing model inference), and the like.

Note that AI model training may mean processing for training an AI model with a data-driven method and acquiring a trained AI model for inference.

AI model validation may mean sub-processing of training for evaluating quality of an AI model by using a data set different from the data set used for model training. The sub-processing is useful for selection of model parameters generalized beyond the data set used for model training.

AI model testing may mean sub-processing of training for evaluating performance of a final AI model by using a data set different from the data set used for model training/validation. Note that testing need not presuppose subsequent model tuning, unlike validation.

A model inference stage is to perform model inference, based on the data (inference data) transferred from the collection stage. This stage may include data preparation (for example, performing preprocessing, cleaning, formatting, conversion, and the like of data), model inference, model monitoring (for example, monitoring of performance of model inference), model performance feedback (feeding back model performance to an entity performing model training), output (providing a model output to an actor), and the like.

Note that AI model inference may mean processing for producing a set of outputs from a set of inputs by using a trained AI model.

A UE-side (UE side) model may mean an AI model whose inference is entirely performed in the UE. A network side model may mean an AI model whose inference is entirely performed in the network (for example, the gNB).

A one-sided model may mean the UE-side model or the network side model. A two-sided model may mean a pair of AI models that perform joint inference. Here, joint inference may include AI inference whose inference is jointly performed by the UE and the network, and for example, a first part of the inference may be first performed by the UE and the remaining part may be performed by the gNB (or vice versa).

AI model monitoring may mean processing for monitoring inference performance of an AI model, and may be interchangeably interpreted as model performance monitoring, performance monitoring, and the like.

Note that model registration may mean assigning a version identifier to a model and making the model executable (registering the model) by compiling it into specific hardware used in the inference stage. Model deployment may mean delivering a runtime image (or an image of an execution environment) of a fully developed and tested model to a target (for example, the UE/gNB) in which inference is performed (or enabling the runtime image in the target).

An actor stage may include an action trigger (for example, determining whether to trigger action to another entity), feedback (for example, feeding back information required for training data/inference data/performance feedback), and the like.

Note that, for example, training of a model for mobility optimization may be performed in, for example, maintenance, operation, and administration in a network (NW) (Operation, Administration and Maintenance (Management) (OAM))/gNodeB (gNB). In the former case, interoperation, large amounts of storage, operator manageability, model flexibility (such as feature engineering) are advantageous. In the latter case, model update latency, data exchange for model deployment, and the like are advantageously not required. The inference of the model described above may be performed in the gNB, for example.

The entity performing training/inference may differ depending on a use case (that is, a function of the AI model). The function of the AI model may include beam management, beam prediction, an autoencoder (or information compression), CSI feedback, positioning, and the like.

For example, for AI-aided beam management based on a measurement report, the OAM/gNB may perform the model training, and the gNB may perform the model inference.

For AI-aided UE-assisted positioning, a Location Management Function (LMF) may perform the model training, and the LMF may perform the model inference.

For CSI feedback/channel estimation using an autoencoder, the OAM/gNB/UE may perform the model training, and the gNB/UE may perform the model inference (jointly).

For AI-aided beam management or AI-aided UE-based positioning based on beam measurements, the OAM/gNB/UE may perform the model training, and the UE may perform the model inference.

Note that model activation may mean activating an AI model for a specific function. Model deactivation may mean deactivating an AI model for a specific function. Model switching may mean deactivating a currently active AI model for a specific function and activating a different AI model.

Model transfer may mean delivering an AI model on an air interface. The delivering may include delivering one or both of parameters of a model structure known to a receiving side and a new model having parameters. The delivering may include a full model or a partial model. Model download may mean model transfer from the network to the UE. Model upload may mean model transfer from the UE to the network.

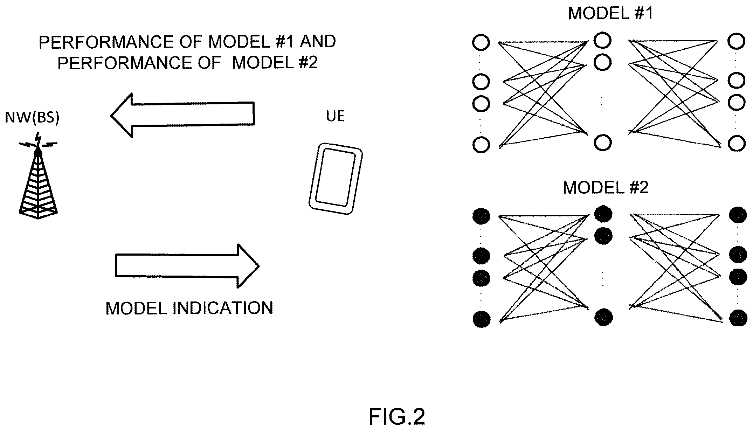

FIG. 2 is a diagram to show an example of identification of an AI model. In the present example, a UE and an NW (for example, base station (BS)) can recognize models #1 and #2 (need not fully understand details of the models). The UE may report, for example, the performance of model #1 and the performance of model #2 to the NW, and the NW may indicate the UE about an AI model to use.

### Life Cycle Management (LCM)

In future radio communication systems (for example, Rel. 18 or later versions), introduction of a plurality of types of LCM is under study.

The plurality of types of LCM may be LCM based on functionality and LCM based on model ID. The LCM based on functionality may be referred to as functionality-based LCM, and the LCM based on model ID may be referred to as model-ID-based

### LCM.

In the functionality-based LCM, an NW (for example, a base station/NW node) may indicate operation (for example, at least one of activation, deactivation, fallback operation, and switch) related to the functionality of AI/ML. Here, the fallback operation may be operation based on information (input information) used when a corresponding AI functionality is applied or operation based on information (input information) used when a corresponding AI functionality is applied and a non-AI functionality.

A UE may perform model-level LCM (for example, at least one of model switching and model selection) in an indicated functionality.

Which model is activated/deactivated in the functionality may be transparent.

For notification of a supported functionality, reporting of UE capability information may be used.

In model-ID-based LCM, an NW (for example, a base station/NW node) may indicate operation (for example, at least one of activation, deactivation, fallback operation, and switching) related to an individual AI/ML model by a model ID.

A UE may perform model-level LCM (for example, at least one of model switching and model selection), based on the indication by the NW.

A model may be defined in the NW by a model identifier (ID).

### (Model Delivery/Transfer Related Case)

For model delivery/transfer, when a model is trained by an NW, three cases are defined in an existing scenario.

### {Case y}

First, the NW trains a model and delivers the model to a UE outside a 3GPP network by offline engineering of a plurality of vendors.

The UE then reports supporting of the delivered model (this step may be referred to as model identification).

### {Case z2}

First, the NW trains a model by offline engineering of a plurality of vendors and stores the model in a proprietary format. The proprietary format may mean a format defined for each vendor.

The UE then reports use of the stored model in a 3GPP network (this step may be referred to as model identification).

Model transport is then performed.

The UE then reports supporting of the transferred model (this step may be referred to as model identification).

### {Case z4}

First, the UE reports a supported model structure (this step may be referred to as model identification).

The NW then transfers a model parameter of the supported model structure.

The UE then reports supporting of the transferred model (this step may be referred to as model identification).

### (Functionality Identification)

It is conceivable, as a procedure for identifying a functionality, for example, a UE reports a specific condition in UE capability (capability information). In this case, the NW may configure a corresponding functionality, based on the reported condition.

Here, the functionality may refer to a feature/feature group (FG) available in AI/ML enabled by a given configuration and may be, for example, a set of RRC parameters/LPP parameters. The configuration may be supported based on a condition indicated by the UE capability. The functionality may refer to a unit that can be controlled on the UE side in LCM operation

### (activation/deactivation/switching) by an NW.

The LCM operation based on functionality may be controlled based on the configuration of the feature/feature group available in the AI/ML described above. Here, signaling for supporting the LCM operation based on functionality (signaling for activation/deactivation/switching) is studied.

The UE may also report update of an applicable functionality. For example, it is necessary to study a mechanism for updating, after identifying a model, an applicable model.

### (Model Identification)

A model identified by a model ID may be associated with, for example, a configuration/condition/additional condition (such as a specific scenario, site, dataset, or the like). The model may refer to a unit that can be controlled on the UE side in LCM operation (activation/deactivation/switching) by an NW.

The LCM operation based on model ID may be controlled based on the identified model. Here, the model may be associated with a specific configuration/condition related to UE capability of a feature/feature group available in AI/ML and an additional condition determined/identified between the UE side and the NW side.

It is assumed that the LCM based on functionality and the LCM based on model ID are different from each other in identification process and control unit. Here, it is studied to share a procedure for activation/deactivation/switching between the LCM based on functionality and the LCM based on model ID.

The following types are studied as procedures for model identification.
- Type A: Model information and a model ID are associated without signaling. A UE reports a supported model ID to the NW. In other words, mapping between the model ID and the model information is identified by the NW and the UE without signaling. The NW and the UE identify the corresponding model information, based on the received model ID.
- Type B1: Model information is reported from a UE to the NW via an air interface (signaling). Model identification is initiated by the UE, and the NW assists (is responsible for) the rest of the steps of the model identification. During the model identification, a model ID may be assigned to a model.
- Type B2: Model information is reported from an NW to a UE via an air interface (signaling). Model identification is initiated by the NW, and the UE responds to the rest of the steps of the model identification. During the model identification, a model ID may be assigned to a model.

### (Meta Information)

A UE may receive at least one of the following as meta information.

Note that the term "meta information" in the present disclosure is merely an example, and the meta information may mean at least one of specific configuration information, scenario information, environment information, assistance information, and model information. In the present disclosure, meta information, configuration information, scenario information, environment information, support information, and the model information may be interchangeably interpreted.

The meta information used by the UE/NW may include at least one of information related to an NW configuration/deployment, information related to an environment, information related to an AL/ML model on the NW side, and information related to a model requested by the NW.

The information related to NW configuration/deployment may include information related to an antenna configuration, for example.

The information related to an antenna configuration may indicate at least one of the number of horizontal/vertical antenna elements/panels, the number of ports, an antenna interval, an antenna position, a panel position, and transceiver unit (TxRU) mapping, for example.

The information related to an NW configuration/deployment may include information related to a beam configuration, for example.

The information related to a beam configuration may include at least one of a beam width, the number of beams, and a beam direction, for example.

The information related to an NW configuration/deployment may include information related to a TRP, for example.

The information related to a beam configuration may include at least one of the altitude of a TRP and relative locations of multi-TRP, for example.

The information related to an environment may include information related to a deployment scenario, for example.

The information related to a deployment scenario may indicate at least one of an Urban Macro (UMa), an Urban Micro (Umi), and an indoor hotspot (InH), for example.

The information related to an environment may include information related to "indoor" or "outdoor" for example.

The information related to "indoor" or "outdoor" may indicate a probability of being indoors/outdoors, for example.

The information related to an environment may be information related to objects around the UE/base station, for example.

The information related to objects around the UE/base station may indicate deployment of the objects around the UE/base station, for example.

The information related to an environment may include a scenario configuration format (meta information) to be described below, for example.

A use case using the AI model may be associated with the scenario configuration format including long-term features.

Note that the long-term features may be interpreted as short-term/medium-term/long-term features, simply features, and the like, and vice versa. The scenario configuration format may be interpreted as meta information, a meta information format, a scenario and configuration format, a scenario construction format, a scenario format, a configuration format, a use case format, an environment format, a meta format, and the like, and vice versa. The format may be interpreted as a type, a mode, data, a configuration, and the like, and vice versa.

The features may include one or a plurality of combinations of the following elements:
- scenario/model (an Urban Macro (UMa), an Urban Micro (Umi), indoor, outdoor, an indoor hotspot (InH), or the like).
- frequency/frequency range.
- numerology (or a subcarrier spacing).
- distribution/set of general channel parameters (for example, inter-site distances (ISD), gNB height, delay spread, angle spread, Doppler spread, or the like) in a single scenario/model.
- UE distribution.
- UE speed.
- UE track.
- number of transmit beams/receive beams.
- UE rotation pattern.
- gNB/UE antenna configuration (for example, transmit and receive antenna vectors).
- number of cells/number of sectors.
- bandwidth.
- UE payload.
- channel quality (for example, RSRP, SINR).
- beam configuration ID.
- physical cell ID (PCI).
- global cell ID (GCI).
- absolute radio frequency channel number (ARFCN).
- probability of Line Of Site (LOS)/Non-Line Of Site (NLOS).

It may be expected that the UE is configured/registered with a model whose associated scenario configuration format matches a configuration/status of the UE.

It may be expected that the UE activates a model whose associated scenario configuration format matches the configuration/status of the UE.

Correspondence between the use case and the scenario configuration format may be defined in standards, or the UE may be notified of information related to the correspondence. The features included in the scenario configuration format corresponding to the use case may be defined in a standard, or the UE may be notified of information related to the features.

The information related to an AL/ML model on the NW side may include information related to paired models available on the NW side, for example.

The information related to paired models available on the NW side may indicate paired decoders for CSI compression, for example.

The information related to the AL/ML model on the NW side may include information related to preprocessing/post-processing available on the NW side, for example.

The information related to preprocessing/post-processing available on the NW side may include at least one of quantization/dequantization processing, DFT transform, IDFT transform, FFT transform, and IFFT transform, for example.

### (UE Assistance Information)

A UE may report assistance information/meta data (meta information) of an AI/ML model.

The assistance information may include, for example, at least one of the following pieces of information (user statuses).
- Overheating assistance information,
- preference of a DRX parameter,
- priority order for a maximum aggregate bandwidth, and
- preference of the maximum number of MIMO layers.

The AI/ML model may be an AI/ML model registered/configured/compiled/activated in the UE.

The assistance information/meta data of the AI/ML model may be transmitted together with beam information or instead of beam information. The beam information may be, for example, information related to an antenna/beam of the UE.

The assistance information/meta data of the AI/ML model may be at least one piece of information described below.

The assistance information/meta data of the AI/ML model may be the ID of the AI/ML model.

The ID of the AI/ML model may be the ID of a global/local AI/ML model.

The assistance information/meta data of the AI/ML model may be information related to an applicable bandwidth corresponding to the AI/ML model ID.

The bandwidth may be indicated as the minimum/maximum applicable bandwidth.

The information related to the bandwidth may include, for example, information indicating a band indicator (for example, "freqBandIndicatorNR"). The information indicating the band indicator may be represented by a specific number of bits (for example, 10 bits).

The information related to the bandwidth may include, for example, information indicating the bandwidth of an RS associated with a corresponding AI/ML model (for example, "supportedBandwidth") .

The information indicating the bandwidth of the RS associated with the corresponding AI/ML model may indicate frequencies for each frequency range (for example, FR1/FR2 (FR2-1/FR2-2)/FR3/FR4/FR5).

The assistance information/meta data of the AI/ML model may be information related to an applicable area corresponding to the AI/ML model ID.

The information related to the applicable area corresponding to the AI/ML model may include at least one of the following pieces of information (list of information):
- area ID.
- (NR) cell Global ID.
- physical cell ID (Identifier) (of NR).
- absolute Radio Frequency Channel Number (ARFCN).
- evolved Cell global ID (ECGI).

The area ID may include at least one of an NR cell global ID, an NR physical cell ID, and an ARFCN.

The assistance information/meta data of the AI/ML model may be an antenna configuration/beam information corresponding to the AI/ML model ID.

### (KPIs)

For performance monitoring of an AI model, common key performance indicators (KPIs) are under study.

An initial list of common KPIs for evaluating performance effects by an AI/ML model is shown below:
- performance

- intermediate KPI,
- link-level and system-level performance,
- generalization performance,
- over-the-air overhead,
- assistance information overhead,
- data collection overhead,
- model delivery/transfer overhead,
- signaling overhead associated with other AI/ML models,
- inference complexity,
- model inference computational complexity: floating point operations (FLOPs) (which means a floating point operation amount),
- pre-post processing computational complexity;
- model complexity (such as the number of parameters/data size (for example, Mbyte)),
- training complexity,
- LCM related complexity and storage overhead, and
- latency (for example, inference latency).

Note that the KPIs described above are merely examples, and other KPIs (for example, a KPI related to model training, a KPI specific to a use case to be considered for a given use case, and the like) may be added to the list.

Among the KPIs described above, the KPI related to performance may be referred to as a performance KPI.

### (Functionality Related Information)

A UE may report a supporting (or supported) functionality.

The functionality may be associated with specific information. The functionality may include specific information. The functionality may belong to specific information.

In the present disclosure, "be associated with," "include," "belong to," and "correspond to" may be interchangeably interpreted.

The specific information may be at least one of those described below. The specific information and functionality related information may be interchangeably interpreted.

The specific information may be information related to an applicable condition/configuration.

The specific information may be, for example, an applicable NW configuration. For example, an applicable parameter related to the NW configuration may be at least one of a system information parameter and an assistance information parameter.

The specific information may be, for example, an applicable UE configuration. For example, an applicable parameter related to the UE configuration may be a higher layer (for example, RRC) parameter.

The specific information may be, for example, information related to an applicable scenario. The information may be, for example, information indicating at least one of NLOS/LOS, UE distribution, an SINR, an RSRP, a bandwidth, a frequency, indoor/outdoor, and a deployment scenario (for example, at least one of Urban Macro (UMa), Urban Micro (Umi), and indoor hotspot (InH)).

The specific information may be, for example, information related to applicable deployment. The information may be, for example, information indicating at least one of an applicable antenna configuration (for example, at least one of the number of antenna elements/panels in the horizontal/vertical direction, the number of ports, an antenna interval, an antenna position, a panel position, and transceiver unit (TxRU) mapping), a beam configuration (for example, at least one of a beam width, the number of beams, and a beam direction), and TRP information (for example, at least one of the altitude of a TRP and relative positions of multiple TRPs).

The specific information may be, for example, information related to an applicable site. The information may be, for example, information indicating at least one of an area ID, an NR cell global ID, an NR physical cell ID, a specific frequency (for example, ARFCN), and an ECGI.

The specific information may be, for example, information related to applicable paired models. The paired models may be, for example, two (two or more) NW-side models (combination of models). The information may be, for example, information indicating paired models for CSI compression.

The specific information may be, for example, information related to applicable time. The information may be, for example, information indicating an applicable period (interval/duration). The period may be indicated by using, for example, a specific time unit (for example, slot/symbol/subslot/millisecond/second).

The applicable condition/configuration may be predefined in a specification or may be determined/identified by using a specific ID/token. For example, the applicable configuration/scenario/condition may be defined as a specific parameter (for example, a test parameter) or represented by using a specific ID/token.

The performance of a functionality (for example, prediction accuracy, position error) may be assumed to be better (for example, higher) than a specific threshold in the applicable condition/configuration. The specific condition/configuration may be, for example, a condition/configuration in a specific test.

The threshold/performance requirement may be predefined in a specification or may be determined/identified by using a specific ID/token.

If the threshold/performance requirement is based on a specific ID/token, each vendor/operator can define and use a desired threshold/performance.

### (Analysis)

### <Problem 1>

As described above, a UE may have one or a plurality of AI/ML models (which may be referred to simply as a model(s)) for one functionality. In other words, one or more models may possibly be associated with one functionality. If a plurality of models are associated with a UE-side functionality, it is not clear how to determine/judge the number of models that can be associated with a certain functionality in the LCM based on functionality, for example.

### <Problem 2>

One or more functionalities may possibly be defined for one AI/ML-enabled feature. A model can generate a series of outputs (set of outputs). Hence, one or a plurality of functionalities may be associated with/included in a UE-side model. In this case, the following problems are assumed.
- Clarification of whether one model is associated with one or a plurality of functionalities.
- What criterion/rule is used for the clarification.
- Clarification of the numbers of functionalities associated with one model for different assumptions.

### <Problem 3>

Since LCM based on functionality and LCM based on model are supported, it is necessary to clarify whether to support simultaneous operation of the LCM based on functionality and the LCM based on model in one UE.

For example, in a case where the simultaneous operation is not supported, the UE need clarify how to determine/judge either of operation of the LCM based on functionality and operation of the LCM based on model.

In contrast, in a case where the simultaneous operation is supported, it is also assumed that a UE-side model is identified as one model in one case and is identified as one functionality in another case.

Hence, it is necessary to clarify whether one model on the UE side is identified as one model and is identified in one function or is associated with one identified functionality simultaneously. In this case, the UE need clarify what operation to apply or a priority rule of the operation to be applied.

Hence, unless a UE operation based on association of a model and a functionality is clear, preferable overhead reduction/channel estimation/resource use cannot be achieved, which may suppress improvement of communication throughput/communication quality.

In view of this, the inventors of the present invention came up with the idea of a method for solving these problems.

### (Various Interpretations and More)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a CSI-RS, a non zero power (NZP) CSI-RS, a zero power (ZP) CSI-RS, and CSI interference measurement (CSI-IM) may be interchangeably interpreted. The CSI-RS may include other reference signals.

In the present disclosure, a measured/reported RS may mean an RS measured/reported for CSI reporting.

In the present disclosure, timing, a time point, a time, a slot, a sub-slot, a symbol, a subframe, and the like may be interchangeably interpreted.

In the present disclosure, a direction, an axis, a dimension, a domain, a polarized wave, a polarization component, and the like may be interchangeably interpreted.

In the present disclosure, estimation, prediction, and inference may be interchangeably interpreted. In the present disclosure, "estimate," "predict," and "infer" may be interchangeably interpreted.

In the present disclosure, an autoencoder, an encoder, a decoder, or the like may be interpreted as at least one of a model, an ML model, a neural network model, an AI model, an AI algorithm, and the like. The autoencoder may be interchangeably interpreted as an arbitrary autoencoder such as a stacked autoencoder and a convolutional autoencoder. The encoder/decoder in the present disclosure may adopt a model of Residual Network (ResNet), DenseNet, RefineNet, or the like.

In the present disclosure, a bit, a bit string, a bit sequence, a sequence, a value, information, a value obtained from a bit, information obtained from a bit, and the like may be interchangeably interpreted.

In the present disclosure, a layer (for an encoder) may be interchangeably interpreted as a layer (input layer, intermediate layer) used in an AI model. The layer in the present disclosure may correspond to at least one of an input layer, an intermediated layer, an output layer, a batch normalization layer, a convolutional layer, an activation layer, a dense layer, a normalization layer, a pooling layer, an attention layer, a dropout layer, a fully-connected layer, and the like.

In the present disclosure, an RSRP may be interpreted as any parameter (for example, RSRQ, SINR, CSI) related to received power/reception quality and the like, and vice versa.

In the present disclosure, the RS may be a CSI-RS, an SS/PBCH block (SS block (SSB)), or the like, for example. An RS index may be a CSI-RS resource indicator (CRI), an SS/PBCH block resource indicator (SSBRI), or the like.

In the present disclosure, the channel measurement/estimation may be performed by using at least one of a channel state information reference signal (CSI-RS), a synchronization signal (SS), a synchronization signal/broadcast channel (Synchronization Signal/Physical Broadcast Channel (SS/PBCH)) block, a demodulation reference signal (DMRS), a reference signal for measurement (Sounding Reference Signal (SRS)), and the like, for example.

In the present disclosure, receive beam assumption, the number of receive beams, the index (indices) of receive beam(s), receive beam selection, receive beam configuration, and receive beam indication may be interchangeably interpreted. In the present disclosure, a receive beam, a transmit beam, a DL receive beam, a DL transmit beam, and a pair of a transmit beam and a receive beam may be interchangeably interpreted. In the present disclosure, a transmit/receive beam may be interpreted as a transmit/receive beam for beam prediction and a transmit/receive beam for CSI measurement/reporting for beam prediction, and vice versa.

In the present disclosure, a functionality may mean the use of a model or a physical meaning of input/output of a model. A plurality of models may have the same functionality. Monitoring (checking of
performance)/activation/deactivation/switching/fallback/update may be indicated (controlled) based on a functionality (for example, for each functionality).

A model ID may mean an identifier of a model (or a set of models). A plurality of models may be assigned the same model ID in actual deployment. In this case, these models are different models (for example, different in the number of layers or the like) in actual, but may be treated as the same model.

In the present disclosure, a use case may include AI/ML for at least one of enhancement of CSI feedback/beam management/enhancement of positioning. The use case may include another new use case for AI/ML.

In the present disclosure, collaboration levels may include level x/y/z. Here, the collaboration levels mean collaboration levels between an NW and a UE, and the levels may mean the following contents.
- Level x: no collaboration.
- Level y: signaling-based collaboration without model transfer.
- Level z: signaling-based collaboration with model transfer.
Here, other aspects (whether to involve model update, whether to support model training/model inference) may be applied to define the collaboration levels.

Note that, in the present disclosure, a model ID may be interpreted as a meta information ID (or indicating a set of pieces of meta information), and vice versa. The meta information (or meta information ID) may be associated with information related to applicability of a model/functionality, an environment, a configuration of a UE/gNB, and the like.

In the present disclosure, a functionality may be referred to simply as a "function."

In the present disclosure, a functionality, a function, a functionality ID, a model, and a model ID may be interchangeably interpreted.

In the present disclosure, update, report, and transmission may be interchangeably interpreted.

In the present disclosure, meta information, assistance information, sensing information, a KPI, a performance KPI, a UE status, and a status may be interchangeably interpreted.

In the present disclosure, monitoring and evaluation may be interchangeably interpreted. Monitoring and evaluating validity/applicability may be interchangeably interpreted.

In the present disclosure, determination, judgment, application of specific operation, and decision making may be interchangeably interpreted.

In the present disclosure, an entity, a specific entity, a UE, an NW, a gNB, and an LMF may be interchangeably interpreted.

In the present disclosure, an NW, an LMF and a BS may be interchangeably interpreted.

In the present disclosure, a UE-side model and a UE may be interchangeably interpreted.

In the present disclosure, a model, a UE-side model, a logical model, and a physical model may be interchangeably interpreted.

In the present disclosure, a model/functionality may mean a data-driven algorithm that generates, with application of the AI/ML technology, a series of outputs based on a series of inputs.

In the present disclosure, a logical model may mean a model that is identified and assigned a model ID. A physical model may mean actual implementation of a logical model.

In the present disclosure, a functionality (AI/ML functionality) may mean a specific AI/ML-enabled feature/FG (feature group) enabled by a specific configuration.

In the present disclosure, a performance index and a monitoring index may be interchangeably interpreted.

In the present disclosure, "models/functionalities/types of LCM do not overlap" means at least one of
- only one functionality being associated with a given model, and no other functionality being associated with the model,
- only one model being associated with a given functionality, and no other model being associated with the functionality, and
- model and functionality are not directly associated.

In the present disclosure, "models/functionalities/types of LCM overlap" means at least one of
- one or more functionalities/models being associated with a given model/functionality, and one or more other models/functionalities being additionally associated with the certain
   model/functionality,
- two or more different functionalities/models being associated with one model/functionality, and
- model and functionality are directly associated.

In the present disclosure, operation related to functionality and functionality-based LCM may be interchangeably interpreted. Operation related to model and model-based LCM may be interchangeably interpreted.

In the present disclosure, association, correspondence, and mapping may be interchangeably interpreted.

In the present disclosure, a functionality/model being included in a given model/functionality and a functionality/model being associated with a given model/functionality may be interchangeably interpreted.

In the present disclosure, drop, stop, cancel, puncture, rate-match, postpone, not transmit, and the like may be interchangeably interpreted.

In the present disclosure, embodiments/options may be employed individually or may be employed in combination of a plurality thereof.

### (Radio Communication Method)

Embodiments of the present disclosure can be broadly classified as follows.
- First embodiment: association between a model(s) and a functionality (functionality based).
- Second embodiment: association between a model and a functionality (functionalities) (model based).
- Third embodiment: model-based/functionality-based LCM (individual operation).
- Fourth embodiment: model-based/functionality-based LCM (simultaneous operation).

Hereinafter, the embodiments will be described based on these.

### <First Embodiment>

The first embodiment addresses problem 1/problem 2 described above, and relates to association between a model and functionality (functionality based).

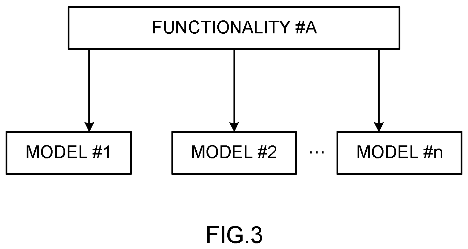

One or a plurality of (i.e., one or more) models may be associated with one functionality. FIG. 3 is a diagram to show an example of association between models and a functionality according to the first embodiment. For example, as shown in FIG. 3, a plurality of models (models #1 to #n) may be associated with one functionality #A. n may be any integer and may represent, for example, the maximum number of models that can be associated with one functionality. Note that #x may represent an ID for specifying/identifying a functionality, and #n may represent an ID for specifying/identifying a model.

Note that, although a number/alphabet is used as an ID for identifying a model/functionality, these are not restrictive, and changes can be made as appropriate. For example, an alphabet may be used as an ID for identifying a model, and a number may be used as an ID for identifying a functionality. This similarly applies to the following embodiments.

In a case where a UE has a plurality of models for one functionality, aspects 1-1 and 1-2 below may be
considered/applied.

### <<Aspect 1-1>>

The number (maximum number) of models that can be associated with one functionality may be configured/indicated by an NW or may be predefined in a specification. The number (maximum number) of models that can be associated with one functionality may be determined based on at least one of the following options.

### <Option 1>

The maximum number may be the same (common) for all UE-side functionalities.

### <Option 2>

The maximum number may be the same (common) for each use case or each AI/ML-enabled feature.

### <Option 3>

The maximum number may vary from functionality to functionality.

In each of the options described above, the maximum number may be determined by at least one of the capability reported by a UE (UE capability)/functionality related information reported by a UE/complexity of a UE-side model/requirement of a functionality.

When the maximum number is configured/indicated, the range of the number of models that can be associated with one functionality (how many of the maximum number of models to associate) may depend on UE implementation.

### <<Aspect 1-2>>

The number of models that can be associated with one functionality may be configured/indicated by an NW or may be predefined in a specification. The number of models that can be associated with one functionality may be determined based on at least one of the following options.

### <Option 1>

### - By indication by the NW.

The NW may configure/indicate the number of models associated with a given functionality to a UE by using higher layer signaling (RRC/MAC CE)/physical layer signaling (DCI) before or after functionality identification. The configuration/indication may be transmitted from the NW for each UE/use case/AI/ML-enabled feature/functionality.

### <Option 2>

### - By predefinition.

For example, for each use case/AI/ML-enabled feature/functionality, the number of models associated with a given functionality may be predefined in a specification.

### <Option 3>

### - Depending on UE implementation.

In aspects 1-1 and 1-2 described above, the UE may expect to receive a configuration/indication for either or both of the maximum number/number of models associated with a certain functionality.

According to the first embodiment described above, a UE can appropriately recognize association between a given functionality and a model(s).

### <Second Embodiment>

The second embodiment addresses problem 1/problem 2 described above, and relates to association between a model and functionality (functionalities) (model based).

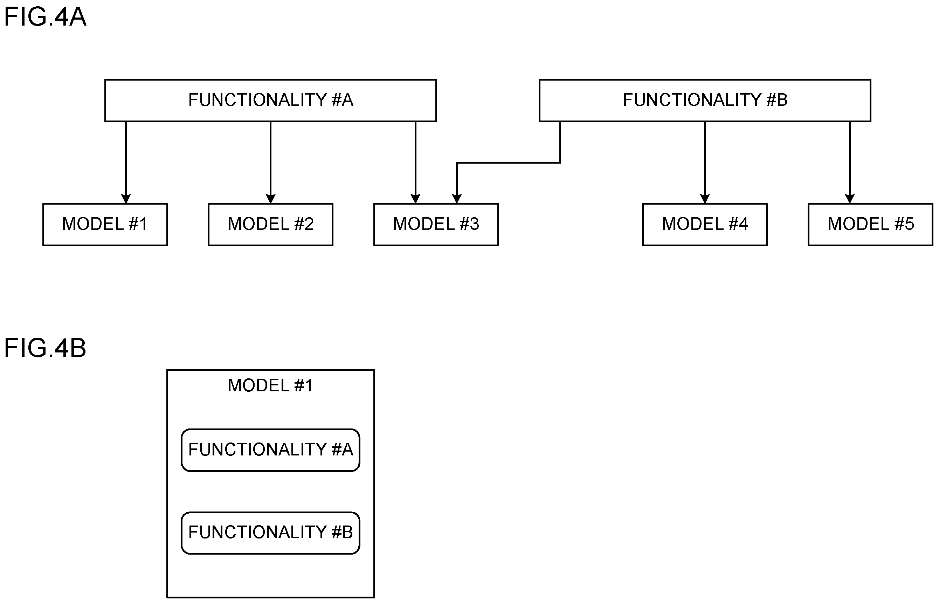

One or a plurality of (i.e., one or more) functionalities may be associated with one model. As types of the association, cases 1 and 2 below can be exemplified. FIG. 4A and FIG. 4B are diagrams to show examples of association between a model(s) and functionalities according to the second embodiment. More specifically, FIG. 4A corresponds to case 1, and FIG. 4B corresponds to case 2.

### <Case 1>

Case 1 illustrates a case where a UE-side model is included in a plurality of functionalities. As shown in FIG. 4A, a plurality of models (models #1 to #3) may be associated with (included in) functionality #A. A plurality of models (models #3 to #5) are associated with (included in) functionality #B. Here, focus on model #3. It can be said that a plurality of functionalities (functionalities #A and #B) are associated with model #3.

### <Case 2>

Case 2 illustrates a case where a UE-side model includes a plurality of functionalities or a case where the UE-side model is identified as (having) a plurality of functionalities. As shown in FIG. 4B, model #1 includes (is associated with) a plurality of functionalities (functionalities #A and #B).

The second embodiment can be classified into aspects 2-1 and 2-2.

### <<Aspect 2-1>>

Aspect 2-1 describes a concrete example of a case where one model is associated with one or a plurality of (i.e., one or more) functionalities.

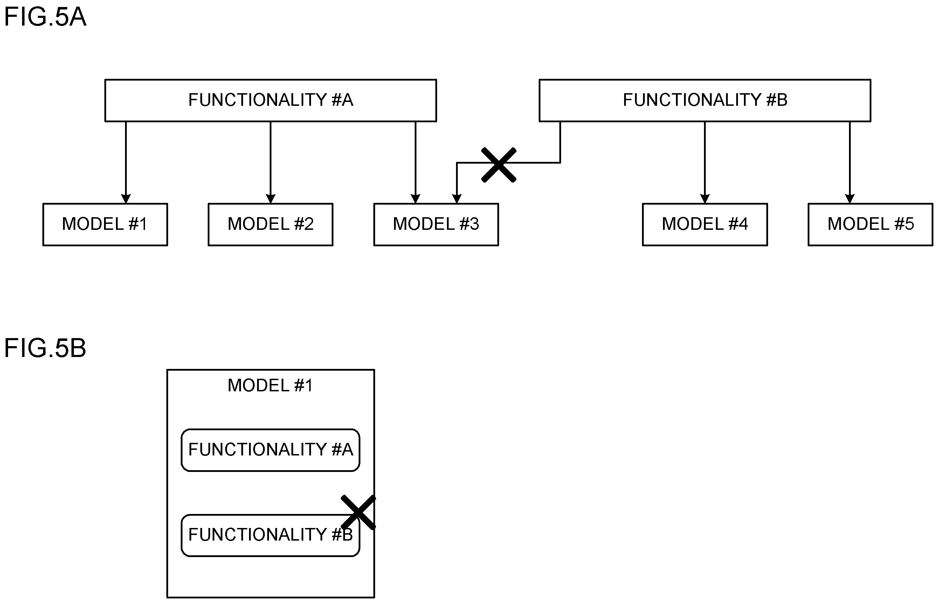

As a case where one model is associated with one or more functionalities, at least one of Alt1 and Alt2 below may be considered/applied. FIG. 5A and FIG. 5B are diagrams to show examples of the association between a model(s) and functionalities according to the second embodiment.

### <Alt1>

One model may be associated with only one functionality (and need not be associated with a plurality of (two or more) functionalities).

FIG. 5A is a diagram to show an example of Alt1 in consideration of case 1 described above. As shown in FIG. 5A, a plurality of models (models #1 to #3) may be associated with (included in) functionality #A. A plurality of models (models #4 and #5) are associated with (included in) functionality #B. Here, focus on model #3. While functionality #A is associated with model #3, functionality #B is not associated with model #3. In other words, each model (each of models #1 to #5) is associated with only one functionality (functionality #A or #B).

FIG. 5B is a diagram to show an example of Alt1 in consideration of case 2 described above. As shown in FIG. 5B, model #1 includes (is associated with) only one functionality (functionality #A).

### <Alt2>

One model may be associated with a plurality of functionalities.

FIG. 4A is a diagram to show an example of Alt2 in consideration of case 1 described above. As shown in FIG. 4A, a plurality of models (models #1 to #3) may be associated with (included in) functionality #A. A plurality of models (models #3 to #5) are associated with (included in) functionality #B. Here, focus on model #3. It can be said that a plurality of functionalities (functionalities #A and #B) are associated with model #3.

FIG. 4B is a diagram to show an example of Alt2 in consideration of case 2 described above. As shown in FIG. 4B, model #1 includes (is associated with) a plurality of functionalities (functionalities #A and #B).

### <<Aspect 2-2>>

Aspect 2-2 describes UE operation of a case where one UE-side model is associated with a plurality of functionalities.

In functionality identification and the LCM based on functionality, when one UE-side model is associated with a plurality of functionalities, whether simultaneous operation of different functionalities is supported may be (determined) according to at least one of the following options.

<Option 1>

Simultaneous operation of a plurality of functionalities associated with the same model is not supported.

### (Option 1-1)

The UE need not expect that the UE-side model is activated simultaneously by different functionalities.

### (Option 1-2)

When the UE simultaneously receives activation commands/requests from a plurality of functionalities in the UE-side model, the priority order/priorities of the functionalities may be determined according to at least one of the following. Here, each activation command/request is included in the corresponding functionality and may be transparent to the NW.

### {Option 1-2-1}

The priority order/priorities may be configured/indicated by the NW via higher layer signaling (RRC/MAC CE/LPP)/physical layer signaling (DCI).

### {Option 1-2-2}

The priority order/priorities may be in conformity with a rule predefined in a specification. The priority rule may be determined based on, for example, a time order (reception order) of the activation commands/requests, use cases/AI/ML-enabled features/functionalities/LCM procedures/the number of configured functionality IDs.

### {Option 1-2-3}

The priority order/priorities may be (autonomously) determined/judged by the UE. In this case, the UE may notify the NW of the determined/judged priority order/priorities via higher layer signaling (RRC/MAC CE)/physical layer signaling (UCI).

### <Option 2>

A plurality of functionalities associated with the same model can be activated simultaneously.

### <Option 3>

Whether simultaneous operation of different functionalities is supported may depend on UE capability (reporting).

In Aspect 2-2, the priority order/priorities of the functionalities may be interpreted as the priority order/priorities of a model, and vice versa.

### <<Variations>>

It is not expected, in some cases, that a plurality of functionalities associated with the same processing component (for example, AI/ML model) are activated simultaneously. For such a case, a UE may report that it is not expected that certain functionalities are activated simultaneously. The certain functionalities may be determined based on UE capability, predefined in a specification, or configured/indicated by an NW via higher layer signaling/physical layer signaling.

According to the second embodiment described above, a UE can appropriately recognize association between a given functionality (functionalities) and a model. In a case where a plurality of functionalities are associated with one model, the UE can appropriately judge supporting of simultaneous operation of the plurality of functionalities.

### <Third Embodiment>

The third embodiment addresses problem 3 described above and relates to model-based/functionality-based LCM (individual operation).

For all UEs, it is assumed that the UEs support the (model-based) LCM based on model/(functionality-based) LCM based on functionality.

In the third embodiment, UE operation of a case where a UE does not support simultaneous operation of the LCM based on model and LCM based on functionality is described. In the case where the simultaneous operation is not supported, either the model-based or functionality-based LCM is applied, which allows simpler scheduling.

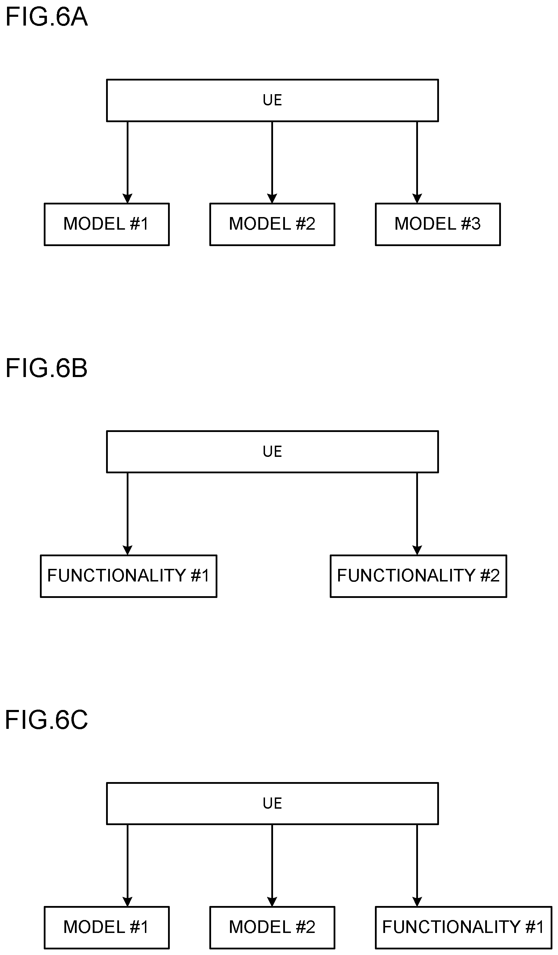

The types of LCM supported will be described with reference to FIG. 6. FIG. 6A to FIG. 6C are diagrams to show variations of LCM association supported by a UE (terminal).

The UE may have (may be associated with) only one type of LCM, i.e., either model based/functionality based. For example, as shown in FIG. 6A, the UE may have (may be associated with) a plurality of models (models #1 to #3) as the model-based LCM. Alternatively, as shown in FIG. 6B, the UE may have (may be associated with) a plurality of functionalities (functionalities #1 and #2) as the functionality-based LCM.

The UE may have (may be associated with) both types of LCM, i.e., model based/functionality based. For example, as shown in FIG. 6C, the UE may have (may be associated with) a plurality of models (models #1 and #2) as the model-based LCM and functionality #1 (which may be more than one) as the functionality-based LCM.

In FIG. 6A to FIG. 6C, the numbers of models/functionalities associated with the UE are merely examples and are not restrictive. Changes can be made as appropriate.

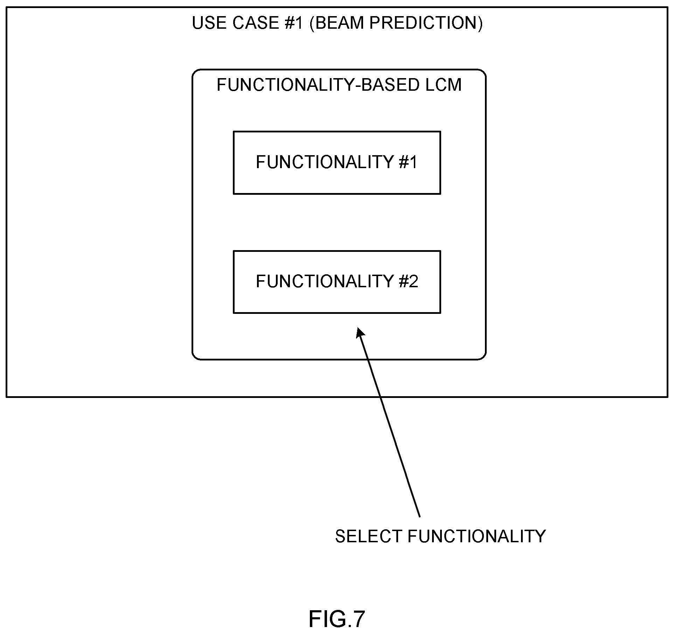

The third embodiment can be classified into aspects 3-1 to 3-3. FIG. 7 to FIG. 9 are diagrams to show examples of LCM association supported by a UE according to the third embodiment.

### <<Aspect 3-1>>

The present aspect describes a case where a model(s) and functionalities do not overlap, in other words, a case where a model(s) and functionalities are not directly associated with each other. As shown in FIG. 7, in given use case #1 (for example, beam prediction), a case is assumed where the UE has (is associated with) a plurality of functionalities (functionalities #1 and #2) as the LCM based on functionality. The UE may have a plurality of models as the model-based LCM, separately from the functionality-based LCM.

In this case, the UE may determine LCM to use (select a specific functionality/model), based on a certain rule to be described later. The UE can switch between the functionality-based LCM/model-based LCM according to the certain rule.

### <<Aspect 3-2>>

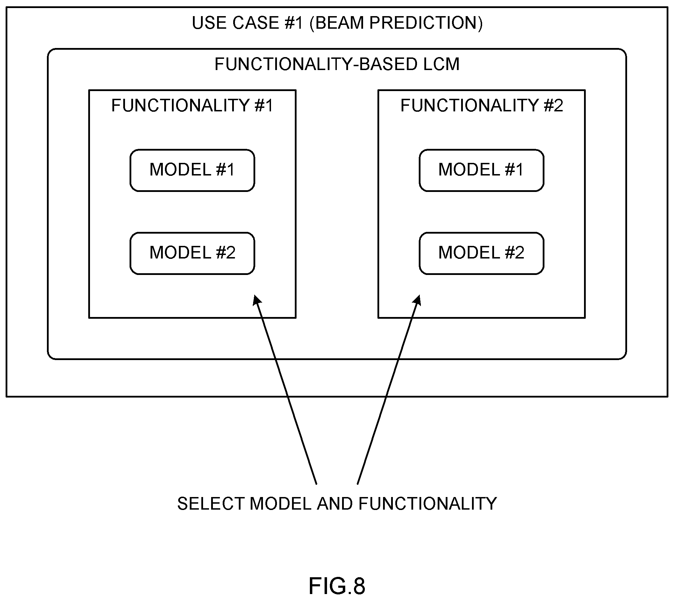

The present aspect describes a case where models and functionalities overlap, in other words, a case where models and functionalities are directly associated with each other. As shown in FIG. 8, in given use case #1 (for example, beam prediction), a case is assumed where the UE has (is associated with) a plurality of functionalities (functionalities #1 and #2) as the LCM based on functionality.

Here, each of functionalities #1 and #2 has (is associated with) a plurality of models (models #1 and #2). In other words, a plurality of models (models #1 and #2) are associated with each of the plurality of functionalities (functionalities #1 and #2) in an overlapping manner. In this case, the UE may determine LCM to use (select a specific model and functionality), based on a certain rule.

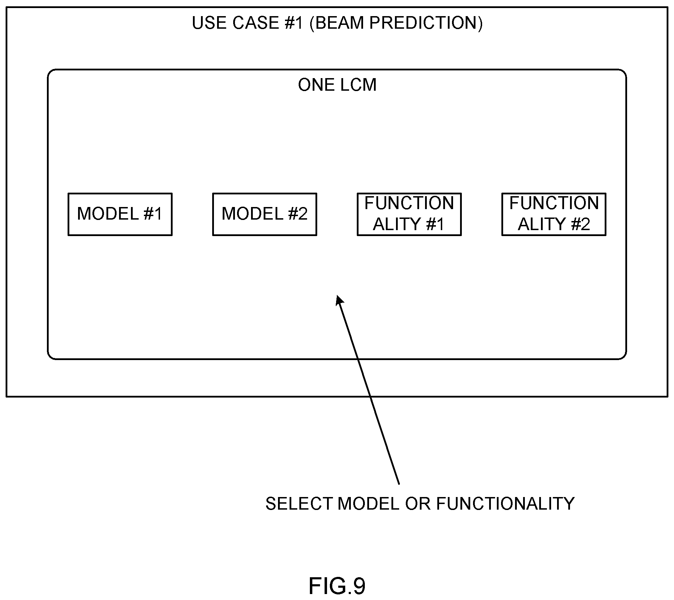

As another example, as shown in FIG. 9, in given use case #1 (for example, beam prediction), a case is assumed where the UE has (is associated with) a plurality of models (models #1 and #2) and a plurality of functionalities (functionalities #1 and #2) as one type of LCM (model-based or functionality-based). In this case, the plurality of models and the plurality of functionalities are associated within the one type of LCM (LCM in a common/overlapping manner). In this case, the UE may determine LCM to use (select a specific model or functionality), based on a certain rule.

Hence, when the UE has a model(s) and functionality (functionalities) that are identified in an overlapping manner for a certain use case, the UE can identify (recognize) both the model(s) and the functionality (functionalities) for each use case. In this case, the UE can determine an activated model/functionality, based on the ID of a configured/indicated model/functionality.

### <<Aspect 3-3>>

The present aspect describes operation of a case where the UE does not support simultaneous operation of the model-based LCM and the functionality-based LCM.

The UE may determine which of the model-based LCM and the functionality-based LCM to apply, based on at least one of certain rules (options 1 to 3) described below. Options 1 to 3 below may be applied before identification of a model/functionality.

### <Option 1>

### - By indication by the NW.

The NW may transmit indication to the UE to make notification of a priority order related to management of a model(s)/functionality (functionalities) (model-level scale/functionality-level scale). The indication may be UE-specific/cell-specific. The indication may be transmitted by using higher layer signaling (RRC/MAC CE/SIB)/physical layer signaling (DCI).

### <Option 2>

### - By predefinition.

Option 2 can be further classified into Alt1 to Alt5 below.

### (Alt1)

The LCM to be applied may be determined based on a collaboration level. For example, when a collaboration level (level x/y) is configured/indicated, the functionality-based LCM may be selected. When a collaboration level (level z) is configured/indicated, the model-based LCM may be selected.

### (Alt2)

The LCM to be applied may be determined based on a use case/sub-use case/feature. For example, when a use case is positioning, the functionality-based LCM may be selected. When a use case is CSI feedback, the model-based LCM may be selected.

In Alt2, in a case where a plurality of use cases/features are supported, specific LCM may be preferentially selected/applied for a given use case. For example, when CSI feedback is included in a plurality of use cases, the model-based LCM may be preferentially selected for CSI feedback (regardless of other use cases).

### (Alt3)

The LCM to be applied may be determined based on whether model transfer is supported for the UE. For example, when model transfer is not supported for the UE, the functionality-based LCM may be selected. When model transfer is supported for the UE, the model-based LCM may be selected.

### (Alt4)

The LCM to be applied may be determined based on whether the UE is requested for model information by the NW. For example, when the UE is not requested for model information by the NW, the functionality-based LCM may be selected. When the UE is requested for model information by the NW, the model-based LCM may be selected.

### (Alt5)

The LCM to be applied may be determined based on any combination of Alt1 to Alt4.

### <Option 3>

### - By determination by the UE.

The LCM to be applied may be (autonomously) determined/judged by the UE. In this case, the UE may notify the NW of (information related to/information identifying) the determined/judged LCM via higher layer signaling (RRC/MAC CE)/physical layer signaling

### (UCI).

According to the third embodiment described above, a UE can appropriately control the model-based/functionality-based LCM (individual operation).

### <Fourth Embodiment>

The fourth embodiment addresses problem 3 described above and relates to model-based/functionality-based LCM (simultaneous operation).

As described above, for all UEs, it is assumed that the UEs support the LCM based on model/LCM based on functionality.

In the fourth embodiment, UE operation of a case where a UE supports simultaneous operation of the LCM based on model and the LCM based on functionality is described. In the case where the simultaneous operation is supported, excellent flexibility between a model(s) and a functionality (functionalities) can be achieved.

In the case where the UE supports the simultaneous operation of the model-based LCM and the functionality-based LCM, UE-side models may be identified as one model or identified within one functionality.

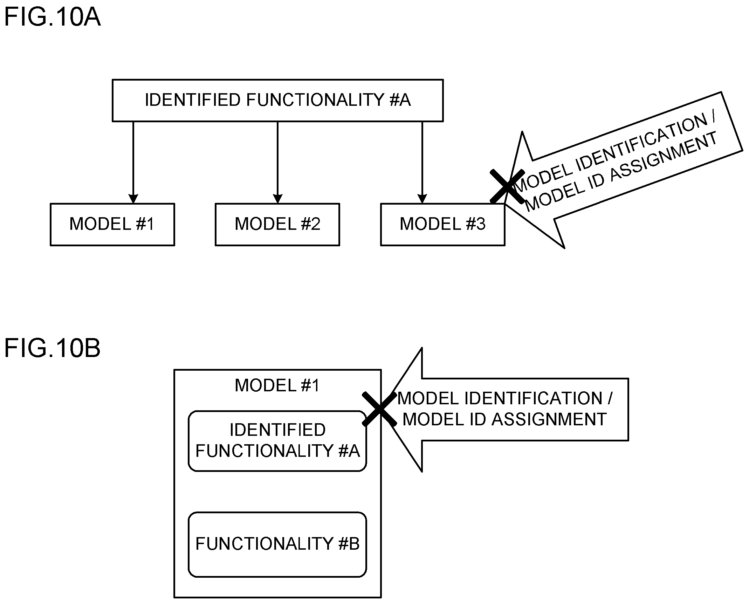

The fourth embodiment can be classified into aspects 4-1 and 4-2. FIG. 10 to FIG. 13 are diagrams to show examples of association between a model(s) and a functionality (functionalities) according to the fourth embodiment.

### <<Aspect 4-1>>

Whether a given model is identified as one model/assigned one model ID and whether the given model is identified within one functionality/associated with functionalities identified simultaneously may be determined/judged based on at least one of the following options.

### <Option 1>

The UE need not expect that identification of a model/functionality and the model/functionality-based LCM overlaps in the UE-side models.

### (Option 1-1)

The UE need not expect that a model ID is assigned to the model associated with an identified functionality, for model identification.

For example, as shown in FIG. 10A, identified functionality #A is associated with a plurality of models (models #1 to #3). In this case, the UE does not expect that a model ID is assigned to model #3 for model identification.

As shown in FIG. 10B, model #1 includes (is associated with) identified functionality #A and functionality #B. In this case, the UE does not expect that a model ID is assigned to model #1 for model identification.

### (Option 1-2)

The UE need not expect that an identified model is associated with an identified functionality.

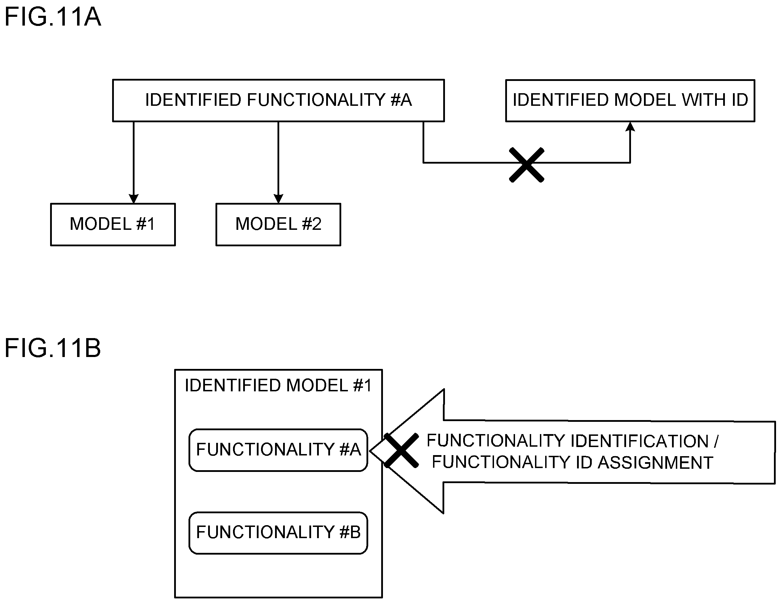

For example, as shown in FIG. 11A, a plurality of models (models #1 and #2) are associated with identified functionality #A. In this case, the UE does not expect that a model identified by a specific ID is associated with identified functionality #A.

As shown in FIG. 11B, identified model #1 includes (is associated with) a plurality of functionalities (functionalities #A and #B). In this case, the UE does not expect that a functionality ID is assigned to functionality #A for functionality identification.

According to option 1 described above, complexity is little, which facilitates model-level/functionality-level scheduling.

### <Option 2>

UE-side models may be identified within one functionality simultaneously with being identified as one model. The UE may expect that the UE-side models are identified within one functionality simultaneously with being identified as one model.

### (Option 2-1)

All UE-side models (physical models/logical models) associated with an identified functionality may be further identified at a model level (unit).

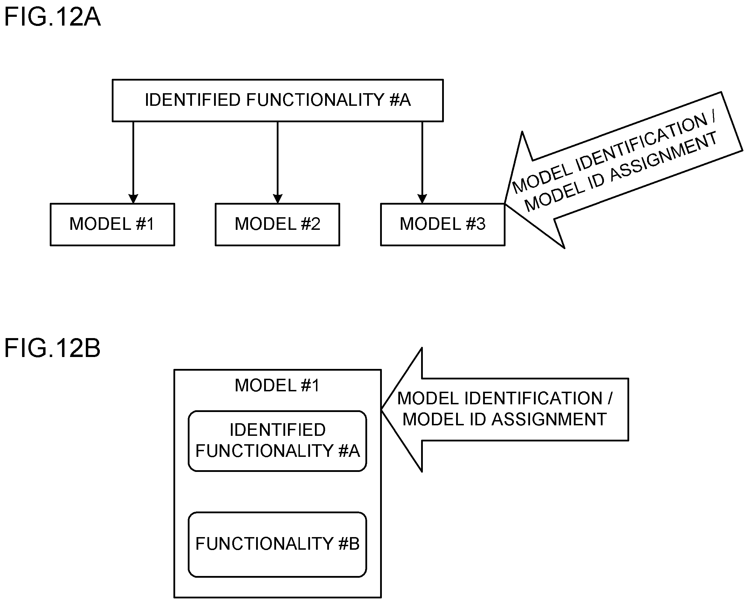

For example, as shown in FIG. 12A, identified functionality #A is associated with a plurality of models (models #1 to #3). In this case, a model ID may be assigned to model #3 for model identification. The UE may expect that a model ID is assigned to model #3 for model identification.

As shown in FIG. 12B, model #1 includes (is associated with) identified functionality #A and functionality #B. In this case, a model ID may be assigned to model #1 for model identification. The UE may expect that the model ID is assigned to model #1 for model identification.

In option 2-1, since the model is identified after the functionality is identified, there is a time series for both (functionality and model).

### (Option 2-2)

All models identified on the UE side may be further associated with the identified functionality.

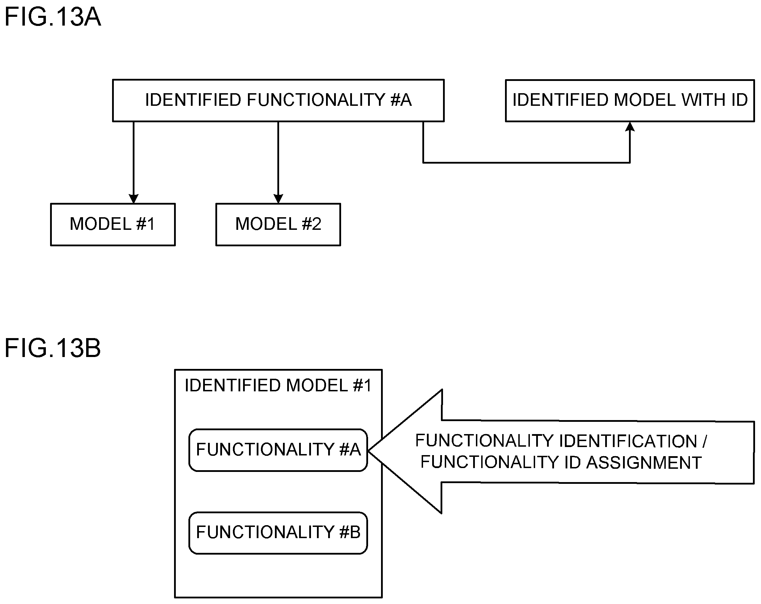

For example, as shown in FIG. 13A, a plurality of models (models #1 and #2) are associated with an identified function #A. In this case, a model identified by a specific ID may be associated with identified functionality #A. The UE may expect that a model identified by a specific ID is associated with identified functionality #A.

As shown in FIG. 13B, identified model #1 includes (is associated with) a plurality of functionalities (functionalities #A and #B). In this case, a functionality ID is assigned to functionality #A for functionality identification. The UE may expect that a functionality ID is assigned to functionality #A for functionality identification.

In option 2-2, identification of a functionality and identification of a model are performed simultaneously. As a result of both (functionality and model) being identified simultaneously, the relationship between both is mapped (associated).

According to option 2 described above, flexibility in switching between a model(s) and a functionality (functionalities) can be ensured.

### <<Aspect 4-2>>

As described above in option 2 of aspect 4-1, UE-side models may be identified within one functionality simultaneously with being identified as one model. Hence, it is assumed that the model-based LCM and the functionality-based LCM overlap in scheduling of the UE-side models.

### <<Aspect 4-2-1>>

In such a case, in a case where the UE-side models are scheduled by only one of the model-based LCM and the functionality-based LCM, the UE may determine which level of LCM to apply, based on at least one of the following options. In other words, the UE may determine/judge the LCM to apply, based on at least one of options 1-1 to 1-3 below.

### <Option 1-1>

### - By predefinition.

For example, when one given model is identified at the model level and the functionality level, the model-based LCM may always be prioritized. A priority order may be determined based on a collaboration level/use case/feature/whether or not model transfer is supported, or the like.

### <Option 1-2>

### - By indication by the NW.

The UE may receive, from the NW, indication that either of the model-based LCM and the functionality-based LCM is applied. In this case, the UE may additionally report at least one piece of information of Alt1 to Alt3 below, to the NW.

### (Alt1)

- Model ID of a model associated with an identified functionality.
- Model information (for example, a model parameter/model structure) of a model associated with the identified functionality.

The information of Alt1 may be reported for functionality identification.

### (Alt2)

- Functionality ID of a functionality associated with an identified model.
- Functionality related information of the functionality associated with the identified model.

The information of Alt2 may be reported for model identification.

### (Alt3)

- Information indicating whether the UE prioritizes/requests the model-based LCM or the functionality-based LCM.
   - NW indication (information related to indication by the NW) may be the same as or different from a UE report (request information reported by the UE).

### <Option 1-3>

### - By determination/judgment by the UE itself.

The UE may report at least one of the following pieces of information to the NW by determination/judgment by the UE itself.
- Information related to adopted LCM (information identifying either one of the model-based LCM and the functionality-based LCM) .
- Model ID/functionality ID of the adopted (either one of model-based and functionality-based) LCM.

For example, when a given model is identified as model #A and model #A is associated with given identified functionality #X, the UE may report model #A to make notification that model #A is scheduled at the model level.

### <Variations>

A certain validity duration may be configured to indicate a duration in which a model is scheduled by the model-based/functionality-based LCM.

### <<Aspect 4-2-2>>

When a UE-side model is scheduled by the model-based LCM and the functionality-based LCM simultaneously, the UE may apply operation of option 1 or 2 below.

### <Option 1>

The UE may additionally report at least one piece of assistance information of Alt1 and Alt2 below to the NW.

### (Alt1)

- Model ID of a model associated with an identified functionality.
- Model information (for example, a model parameter/model structure) of a model associated with the identified functionality.

The information of Alt1 may be reported for functionality identification.

In Alt1, when an overlap occurs between the functionality-based LCM and the model-based LCM in the UE-side model, at the time of identification of a functionality, the model ID/model information associated with the functionality may be reported.

### (Alt2)

- Functionality ID of a functionality associated with an identified model.
- Functionality related information of the functionality associated with the identified model.

The information of Alt2 may be reported for model identification.

In Alt2, when an overlap occurs between the functionality-based LCM and the model-based LCM in the UE-side model, at the time of model identification, the functionality ID/functionality related information associated with the model may be reported.

### <Option 2>

When scheduling is performed by using a model and also an overlap occurs between the functionality-based LCM and the model-based LCM in a UE-side model, the UE may perform at least one operation of Alt1 to Alt3 below.

### (Alt1)

The UE-side model (which may be interpreted as the UE) may simultaneously perform model-level operation and function-level operation.

### (Alt2)

The UE-side model may drop either one of the model-level operation and the function-level operation according to a certain rule. The certain rule may be, for example, the predefined rule described in option 1-1 of aspect 4-2-1.

### (Alt3)

The UE-side model may postpone either one of the model-level operation and the function-level operation according to a certain rule. The certain rule may be, for example, the predefined rule described in option 1-1 of aspect 4-2-1.

According to the fourth embodiment described above, a UE can appropriately control the model-based/functionality-based LCM (simultaneous operation).

### <Supplements>

### {Supplement 1: AI Model Information}

In the present disclosure, AI model information may refer to information including at least one of the following:
- information of an input/output of an AI model.
- information of pre-processing/post-processing for an input/output of an AI model.
- information of a parameter of an AI model.
- training information for an AI model.
- inference information for an AI model.
- performance information related to an AI model.

Here, the information of an input/output of AI model may refer to information including at least one of the following:
- contents of input/output data (for example, RSRP, SINR, amplitude/phase information in a channel matrix (or precoding matrix), information related to an angle of arrival (AoA), information related to an angle of departure (AoD), location information).
- auxiliary information of data (which may be referred to as meta information).
- type of input/output data (for example, an immutable value, a floating-point value).
- bit width of input/output data (for example, 64 bits for each input value).
- quantization interval of input/output data (a quantization step size) (for example, 1 dBm for L1-RSRP).
- possible range of input/output data (for example, [0, 1]).

Note that in the present disclosure, the information related to the AoA may include information related to at least one of an azimuth angle of arrival and a zenith angle of arrival (ZoA). The information related to the AoD may include information related to at least one of, for example, an azimuth angle of departure and a zenith angle of departure (ZoD).

In the present disclosure, the location information may be location information related to the UE/NW. The location information may include at least one of information (for example, a latitude, a longitude, or an altitude) obtained by using a positioning system (for example, satellite positioning system (such as Global Navigation Satellite System (GNSS) and Global Positioning System (GPS)), information of a BS adjacent to the UE (or a serving BS) (for example, an identifier (ID) of the BS/cell, a distance between the BS and the UE, a direction/angle of the BS (UE) when viewed from the UE (BS), coordinates of the BS (UE) when viewed from the UE (BS) (for example, the X/Y/Z-axis coordinates) or the like), a specific address (for example, an Internet Protocol (IP) address) of the UE, and the like. The location information of the UE is not limited to information with reference to the location of the BS and may be information with reference to a specific point.

The location information may include information related to the implementation of the UE itself (for example, the location (position)/direction of an antenna, the location/direction of an antenna panel, the number of antennas, the number of antenna panels, or the like).

The location information may include mobility information. The mobility information may include information indicating at least one of information indicating a mobility type, a moving speed of the UE, an acceleration of the UE, a moving direction of the UE, and the like.

Here, the mobility type may correspond to at least one of fixed location UE, movable/moving UE, no mobility UE, low mobility UE, middle mobility UE, high mobility UE, cell-edge UE, not-cell-edge UE, and the like.

In the present disclosure, environment information (for data) may be information related to an environment in which data is acquired/used, and may correspond to, for example, frequency information (a band ID or the like), environment type information (information indicating at least one of indoor, outdoor, Urban Macro (UMa), Urban Micro (Umi), and the like), information indicating a Line Of Site (LOS)/Non-Line Of Site (NLOS), or the like.

Here, the LOS may mean that the UE and the BS are in an environment in which both can have unobstructed views of each other (or there is no obstruction), and the NLOS may mean that the UE and the BS are not in an environment in which both can have unobstructed views of each other (or there is an obstruction). Information indicating the LOS/NLOS may indicate a soft value (for example, a probability of the LOS/NLOS), or may indicate a hard value (for example, one of the LOS/NLOS).

In the present disclosure, the meta information may mean information related to input/output information appropriate for the AI model, information related to acquired/acquirable data, or the like, for example. The meta information may specifically include information related to a beam of an RS (for example, a CSI-RS/SRS/SSB or the like) (for example, an angle of a direction of each beam, a 3dB beam width, the shape of a directed beam, the number of beams), layout information of an antenna of the gNB/UE, frequency information, environment information, a meta information ID, and the like. Note that the meta information may be used as an input/output of the AI model.

The information of preprocessing/post-processing for an input/output of an AI model described above may include information related to at least one of the following:
- whether to apply normalization (for example, Z score normalization (standardization), minimum-maximum (min-max) normalization).
- parameters for normalization (for example, a mean/variance for Z score normalization, a minimum/maximum value for min-max normalization).
- whether or not to apply a specific numerical inversion method (for example, one hot encoding, label encoding, and the like).
- selection rule whether to be used as training data.

For example, the Z score normalization as the preprocessing may be performed on input information x to obtain normalized input information x_{new} (x_{new} = (x - µ)/σ, where µ represents a mean of x, σ represents a standard deviation) and the obtained normalized input information x_{new} may be input to an AI model, and the post-processing may be performed on an output yₒᵤₜ from the AI model to obtained a final output y.

The information of parameters of an AI model described above may include information related to at least one of the following:
- weight (for example, a coefficient (coupling coefficient) of a neuron) information in an AI model.
- structure of an AI model.
- type of an AI model as a model component (for example, Residual Network (ResNet), DenseNet, RefineNet, a transformer model, CRBlock, a recurrent neural network (RNN), a long short-term memory (LSTM), a gated recurrent unit (GRU)).
- function of an AI model as a model component (for example, decoder, encoder).

Note that the weight information in an AI model may include information related to at least one of the following:
- bit width (size) of the weight information.
- quantization interval of the weight information.
- granularity of the weight information.
- possible range of the weight information.
- parameters of a weight in an AI model.
- information of a difference from a pre-updated AI model (in a case of updating).
- weight initialization method (for example, zero-initialization, random initialization (based on normal distribution/uniform distribution/truncated normal distribution), Xavier initialization (for sigmoid function), He initialization (for rectified linear units (ReLU)).

The structure of an AI model described above may include information related to at least one of the following:
- number of layers.
- type of a layer (for example, a convolutional layer, an activation layer, a dense layer, a normalization layer, a pooling layer, an attention layer).
- layer information.
- time series-specific parameters (for example, bidirectionality, time step), and
- parameters of training (for example, a type of a function (L2 regularization, dropout function, and the like), where to arrange this function (for example, after which layer)).

The layer information may include information related to at least one of the following:
- number of neurons in each layer.
- kernel size.
- stride for pooling layer/convolutional layer.
- pooling method (MaxPooling, AveragePooling, or the like).
- information of a residual block.
- number of heads.
- normalization method (batch normalization, instance normalization, layer normalization, or the like).
- activation function (sigmoid, tanh function, ReLU, leaky ReLU information, Maxout, Softmax).

An AI model may be included as a component of another AI model. For example, an AI model may be an AI model in which processing proceeds in order of a ResNet that is model component #1, a transformer model that is model component #2, a dense layer, and a normalization layer.

Training information for the above AI model may include information related to at least one of the following:
- information for an optimization algorithm (for example, a kind of optimization (stochastic gradient descent (SGD)), AdaGrad, Adam, and the like), parameters for optimization (learning rate, momentum information, and the like).
- information of a loss function (for example, information related to a loss function indexes (metrics) (mean absolute error (MAE)), mean square error (MSE), a cross-entropy loss, NLLLoss, Kullback-Leibler (KL) divergence, and the like).
- parameters to be frozen for training (for example, a layer, a weight).
- parameters to be updated (for example, a layer, a weight).
- parameters to be initial parameters (to be used as initial parameters) for training (for example, a layer, a weight).
- method of training/updating an AI model (for example, the (recommended) number of epochs, a batch size, the number of pieces of data used for training).

The inference information for an AI model described above may include information related to decision tree branch pruning, parameter quantization, the function of the AI model, and the like. Here, the function of the AI model may correspond to at least one of time domain beam prediction, spatial domain beam prediction, an autoencoder for CSI feedback, an autoencoder for beam management, and the like, for example.

The autoencoder for CSI feedback may be used as follows:
- The UE transmits, as the CSI feedback (CSI report), encoded bits output by inputting CSI/channel matrix/precoding matrix to an AI model of the encoder.
- The BS reconfigures the CSI/channel matrix/precoding matrix output by inputting the received encoded bits to the AI model of the decoder.

In spatial domain beam prediction, a UE/BS may input measurement results (beam quality, for example, an RSRP) based on a sparse (or wide) beam into the AI model and output dense (or narrow) beam quality.

In time domain beam prediction, a UE/BS may input time-series (past, present, and the like) measurement results (beam qualities, for example, RSRPs) into the AI model and output future beam quality.

The performance information related to an AI model descried above may include information related to an expected value of a loss function defined for the AI model.

The AI model information in the present disclosure may include information related to an application range (applicable range) of the AI model. The application range may be indicated by a physical cell ID, a serving cell index, or the like. The information related to the application range may be included in the environment information described above.

The AI model information related to a specific AI model may be predefined in a standard, or the UE may be notified of the AI model information from a network (NW). The AI model defined in a standard may be referred to as a reference AI model. The AI model information related to the reference AI model may be referred to as reference AI model information.

Note that the AI model information in the present disclosure may include an index for specifying an AI model (which may be referred to as an AI model index, an AI model ID, a model ID, or the like, for example). The AI model information in the present disclosure may include the AI model index in addition to/instead of the information of an input/output of an AI model described above. Association of the AI model index with the AI model information (for example, the information of an input/output of an AI model) may be predefined in a standard, or the UE may be notified of the association from the NW.

The AI model information in the present disclosure may be associated with the AI model, and may be referred to as AI model relevant information, simply relevant information, or the like. The AI model relevant information need not explicitly include information for identifying the AI model. The AI model relevant information may be information including only the meta information, for example.

In the present disclosure, the model ID may be interchangeably interpreted as an ID (model set ID) corresponding to a set of AI models. In the present disclosure, the model ID may be interchangeably interpreted as the meta information ID. As described above, the meta information (or the meta information ID) may be associated with the information related to a beam (beam configuration). For example, the meta information (or the meta information ID) may be used by the UE to select the AI model by considering which beam is used by the BS, or may be used for notification as to which beam the BS is to use in order to apply the AI model deployed by the UE. Note that, in the present disclosure, the meta information ID may be interchangeably interpreted as an ID (meta information set ID) corresponding to a set of the meta information.

### {Supplement 2: Notification of Information to UE}

Notification of any information to a UE (from an NW) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Supplement 3: Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability as those described below, for example (those given below are merely examples):
- supporting of (functionality-based) LCM based on functionality.
- supporting of (model-based) LCM based on model ID.
- supporting of individual operation/simultaneous operation of model-based/functionality-based LCM.

The specific UE capability may indicate supporting of specific processing/operation/control/information for at least one of the above-described embodiments/options/choices.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of LCM based on model/functionality ID, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment (first/second embodiment) of the present disclosure, the following supplementary notes of the invention will be given.

### {Supplementary Note 1}

A terminal including:
a receiving section that receives information related to the number of models associated with a functionality or the number of functionalities associated with a model; and
a control section that judges a model or a functionality to be applied, based on the information.

### {Supplementary Note 2}

The terminal according to supplementary note 1, wherein the number of models indicates a maximum number that can be associated with the functionality, and is same or different for each of the functionalities or is common for each use case or enabled feature for application.

### {Supplementary Note 3}

The terminal according to supplementary note 1 or 2, wherein the control section judges simultaneous operation of operation related to the model and operation related to the functionality.

### {Supplementary Note 4}

The terminal according to any one of supplementary notes 1 to 3, wherein
the receiving section receives information related to a priority of the functionality or the model, and
the control section controls operation related to a model or a functionality to apply, based on the priority.

### (Supplementary Notes)

Regarding one embodiment (third/fourth embodiment) of the present disclosure, the following supplementary notes of the invention will be given.

### {Supplementary Note 1}

A terminal including:
a receiving section that receives information identifying a model associated with a functionality or a functionality associated with a model; and
a control section that judges a model or a functionality to be applied, based on the information, wherein
the control section judges simultaneous operation of operation related to the model and operation related to the functionality, based on a certain rule.

### {Supplementary Note 2}

The terminal according to supplementary note 1, wherein, in a case where the simultaneous operation of the operation related to the model and the operation related to the functionality is not supported, the control section judges selection of either one of the operation related to the model and the operation related to the functionality, based on a collaboration level of the functionality and the model.

### {Supplementary Note 3}

The terminal according to supplementary note 1 or 2, wherein, in a case where the simultaneous operation of the operation related to the model and the operation related to the functionality is not supported, the control section judges selection of either one of the operation related to the model and the operation related to the functionality, based on a supported use case, a feature, or requested model information.

### {Supplementary Note 4}

The terminal according to any one of supplementary notes 1 to 3, wherein, in a case where the simultaneous operation of the operation related to the model and the operation related to the functionality is supported, the control section controls transmission of a report for identification of the model or the functionality.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

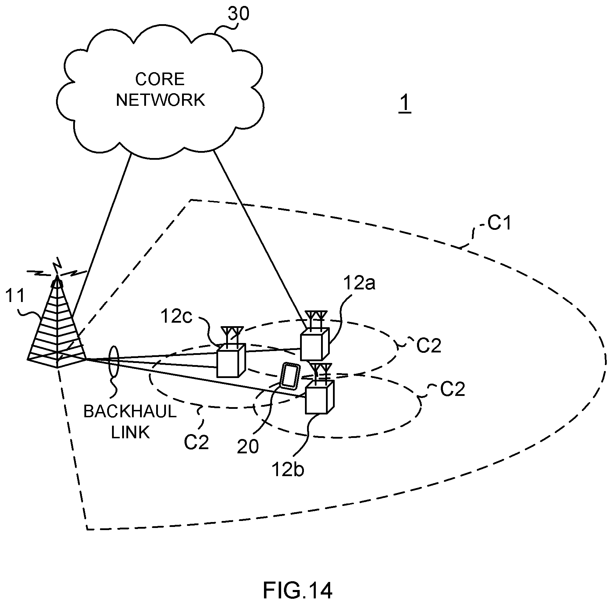

FIG. 14 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR), and so on, whose specifications have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

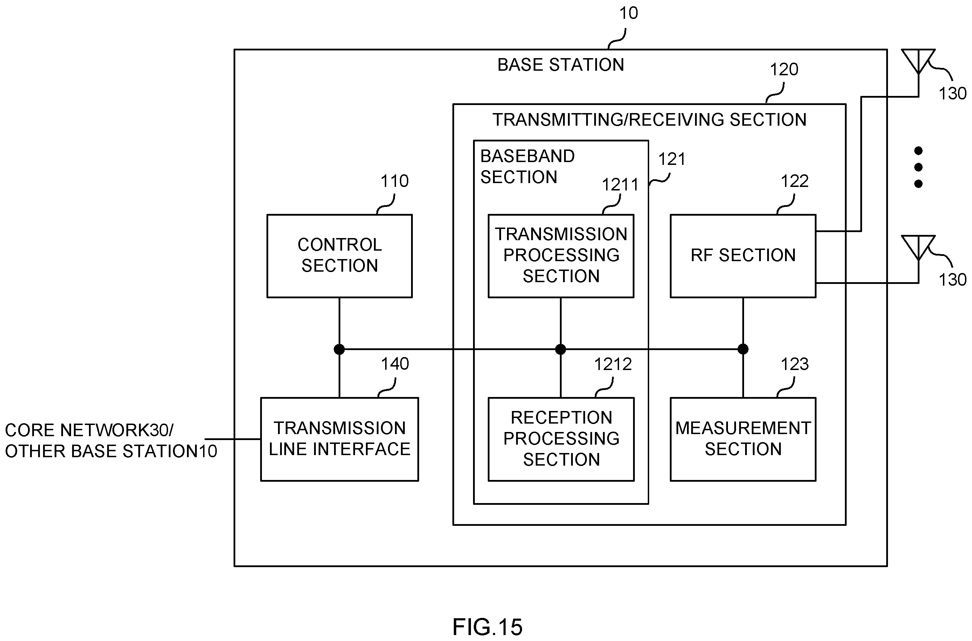

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to the number of models associated with a functionality or the number of functionalities associated with a model. The transmitting/receiving section 120 may receive a signal transmitted based on a model or a functionality judged, based on the information, to be applied.

The transmitting/receiving section 120 may transmit a model associated with a functionality or information identifying a functionality associated with a model. The transmitting/receiving section 120 may receive a signal transmitted based on a model or a functionality judged, based on the information, to be applied. The transmitting/receiving section 120 may receive a signal transmitted based on simultaneous operation of operation related to the model and operation related to the functionality judged based on a certain rule.

### (User Terminal)

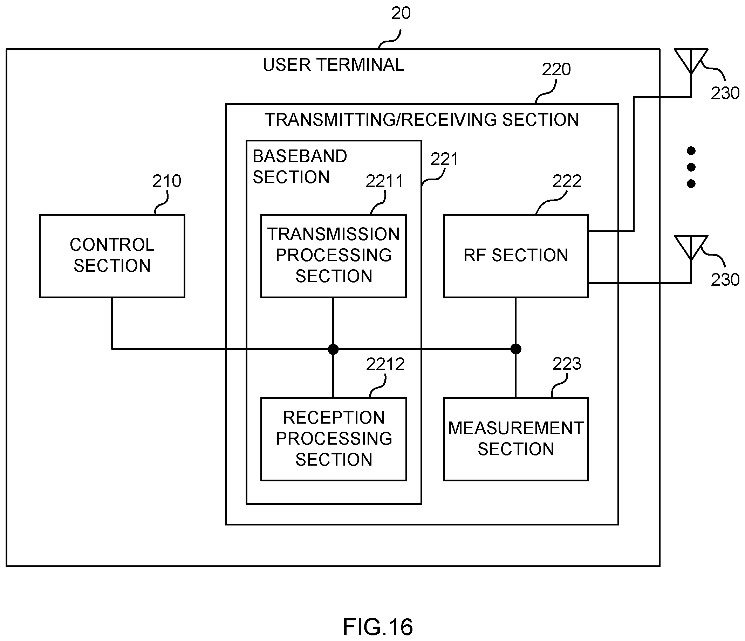

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to the number of models associated with a functionality or the number of functionalities associated with a model. The control section 210 may judge a model or functionality to apply, based on the information. The number of models may indicate a maximum number that can be associated with the functionality, and may be the same or different for each of the functionalities or may be common for each use case or enabled feature for application. The control section 210 may judge simultaneous operation of operation related to a model and operation related to a functionality. The transmitting/receiving section 220 may receive information related to a priority of the functionality or the model. The control section 210 may control operation related to a model or a functionality to be applied, based on the priority.

The transmitting/receiving section 220 may receive a model associated with a functionality or information identifying a functionality associated with a model. The control section 210 may judge a model or functionality to apply, based on the information. The control section 210 may judge simultaneous operation of operation related to a model and operation related to a functionality, based on a certain rule. In a case where the simultaneous operation of the operation related to the model and the operation related to the functionality is not supported, the control section 210 may judge selection of either one of the operation related to the model and the operation related to the functionality, based on a collaboration level of the functionality and the model. In a case where the simultaneous operation of the operation related to the model and the operation related to the functionality is not supported, the control section 210 may judge selection of either one of the operation related to the model and the operation related to the functionality, based on a supported use case, a feature, or requested model information. In a case where the simultaneous operation of the operation related to the model and the operation related to the functionality is supported, the control section 210 may control transmission of a report for identification of the model or the functionality.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

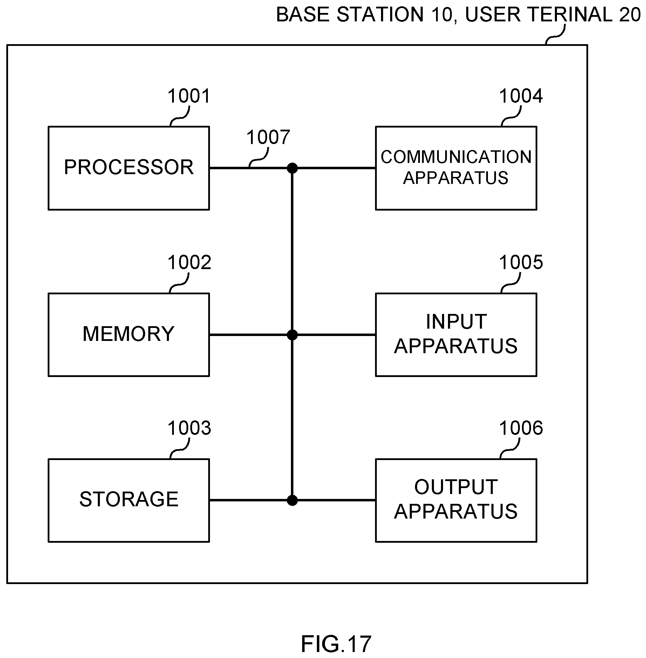

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

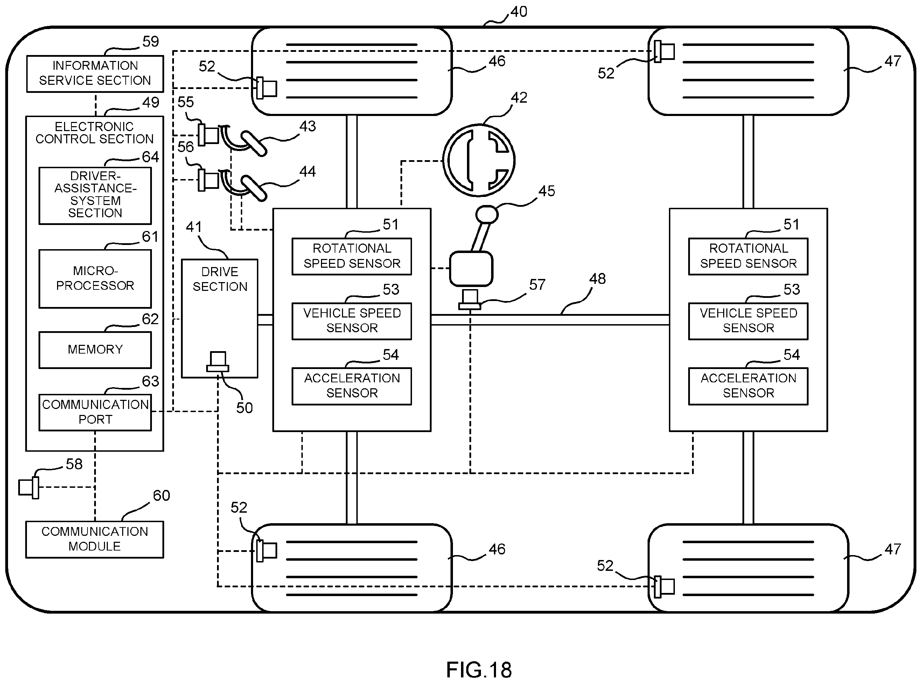

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information identifying a model associated with a functionality or a functionality associated with a model; and
a control section that judges a model or a functionality to be applied, based on the information, wherein
the control section judges simultaneous operation of operation related to the model and operation related to the functionality, based on a certain rule.

2. The terminal according to claim 1, wherein
in a case where the simultaneous operation of the operation related to the model and the operation related to the functionality is not supported, the control section judges selection of either one of the operation related to the model and the operation related to the functionality, based on a collaboration level of the functionality and the model.

3. The terminal according to claim 1, wherein
in a case where the simultaneous operation of the operation related to the model and the operation related to the functionality is not supported, the control section judges selection of either one of the operation related to the model and the operation related to the functionality, based on a supported use case, a feature, or requested model information.

4. The terminal according to claim 1, wherein
in a case where the simultaneous operation of the operation related to the model and the operation related to the functionality is supported, the control section controls transmission of a report for identification of the model or the functionality.

5. A radio communication method for a terminal, the radio communication method comprising:
receiving information identifying a model associated with a functionality or a functionality associated with a model; and
judging a model or a functionality to be applied, based on the information, wherein
the terminal judges simultaneous operation of operation related to the model and operation related to the functionality, based on a certain rule.

6. A base station comprising:
a transmitting section that transmits information identifying a model associated with a functionality or a functionality associated with a model; and
a receiving section that receives a signal transmitted based on a model or functionality judged, based on the information, to be an application target, wherein
the receiving section receives a signal transmitted based on simultaneous operation of operation related to the model and operation related to the functionality judged based on a certain rule.
